# EUROPÄISCHE PATENTANMELDUNG

(11) **EP 0 913 674 A1**
(43) Veröffentlichungstag der Anmeldung: **06.05.1999**
(21) Anmeldenummer: 97119069.9
(22) Anmeldetag: 31.10.1997
(51) Int. Cl.: G01J 3/46, G01N 21/59

(54) **Rechnergesteuerte Messvorrichtung**

(71) Anmelder: Gretag-Macbeth AG, 8105 Regensdorf (CH)
(72) Erfinder: Senn, Thomas, 8157 Dielsdorf (CH); Pernet, Robert, 8046Zürich (CH)
(74) Vertreter: Schwabe - Sandmair - Marx

(57) **Zusammenfassung**

Eine rechnergesteuerte Messvorrichtung, speziell ein Farbmessgerät oder ein Spektralfotometer, umfasst eine Messeinheit (1), welche die zu messenden Grössen erfasst und in entsprechende elektrische Signale umwandelt, eine mit der Messeinheit zusammenwirkende Steuereinrichtung, welche die Messeinheit steuert und die von der letzteren erzeugten elektrischen Signale aufbereitet, und eine mit der Steuereinrichtung zusammenwirkende Eingabe/Ausgabe-Einheit (5) zur manuellen Bedienung der Messvorrichtung und zur Anzeige von Messergebnissen und Benutzerführungsinformationen. Die Steuereinrichtung ist durch einen Rechner (3) gebildet, auf dem ein die Funktionalitäten der Messvorrichtung implementierendes Steuerungsprogramm (31) abläuft. Ferner sind mit dem Rechner zusammenwirkende Schnittstellenmittel (6) vorgesehen, über welche der Rechner (3) mit einem externen Rechner kommunizieren kann, wobei aus der Messvorrichtung von dieser erzeugte Messdaten abgerufen und dem Rechner (3) denselben steuernde Steuerungsdaten zugeführt werden können. Im Rechner (3) ist ein Dateisystem (32,4) implementiert, in welchem die Mess- und/oder Steuerungsdaten in Form von Dateien definierten Formats abgelegt werden können. Ferner sind Mittel (34,35) vorhanden, um das Dateisystem (32,4) über die Schnittstellenmittel (6) einem Netzwerk zur Verfügung zu stellen. Die Kommunikation zwischen dem Rechner (3) und einem an das Netzwerk angeschlossenen externen Rechner erfolgt anhand der im Dateisystem (32,4) abgelegten Dateien und kann so ohne herstellerspezifisches Datenaustauschprotokoll auskommen.

## Beschreibung

Die Erfindung betrifft eine rechnergesteuerte Messvorrichtung, insbesondere zur Erfassung von fotometrischen Messwerten, gemäss dem Oberbegriff des unabhängigen Anspruchs. Insbesondere betrifft die Erfindung ein Densitometer, Spektralfotometer oder Farbmessgerät.

Zum heutigen Zeitpunkt werden Spektralfotometer, Densitometer, Farbmessgeräte dieser Art typischerweise mit Hilfe eines herstellerspezifischen Protokolls über eine Schnittstelle (typischerweise RS232c oder IEEE 488) zum Datenaustausch mit einem externen Rechner verbunden. Dabei werden vielfach auf dem Messgerät aus den rohen spektralen / densitometrischen Messwerten farbmetrische Messwerte (Lab, LCH, Luv, XYZ ..) berechnet und dann über eines der genannten herstellerspezifischen Datenübertragungsprotokolle an den angeschlossenen Rechner übermittelt.

Es gibt heute auch Geräte, die zur Off-Line Erfassung von farbmetrischen Messwerten geeignet sind. Diese Messgeräte werden nach der Off-Line Erfassung und Speicherung der Messdaten an einen externen Rechner angeschlossen, und die erfassten und gespeicherten Messdaten werden über ein herstellerspezifisches Datenübertragungsprotokoll an den externen Rechner übertragen.

Bekannte Vertreter von Messgeräten dieser Art sind z.B. die Hand-Spektralfotometer der Serie SPM (z.B. SPM 100) der Anmelderin. Diese und ähnliche Messgeräte sind z.B. in US-A-4 961 646, US-A-5 267 178 und EP-A-0 698 785 (entsprechend US Patentanmeldung Ser.No. 08/517678 vom 22.08.1995) beschrieben.

Für die Schnittstelle zum Benutzer stellen diese Messgeräte sehr oft nur eine relativ kleine Anzeige zur Verfügung. Auf dieser Anzeige werden die Auswertungen für den Benutzer visualisiert bzw. der Benutzer kann die benötigen Einstellungen am Messgerät vornehmen.

Diese heute gängige Art der Messgeräteanbindung an externe Rechner ist mit verschiedenen Nachteilen behaftet.

Für jeden Messgerätetyp, jeden Messgerätehersteller und jede Rechnerplattform (Windows, Unix, Mac-OS) muss das Datenübertragungsprotokoll neu programmiert werden. Dies ist für den Softwarehersteller, der Anwendungssoftware zu diesen Messgeräten schreibt, mit erheblichem Aufwand verbunden.

Die möglichen Auswertungen der Messdaten durch die im Messgerät verfügbare Firmware sind durch den Hersteller vorgegeben und nicht erweiterungsfähig. Es ist nicht möglich, zusätzliche, von Fremdherstellern geschriebene Softwaremodule zur Datenauswertung in das Messgerät zu laden, um eine Vorverarbeitung bzw. Auswertung der Messdaten bereits im Messgerät vorzunehmen.

Die Visualisierung der Messdaten ist nur auf der eingebauten kleinen Anzeige oder mit Hilfe eines speziell geschriebenen Auswertungsprogramms auf einem angeschlossenen externen Rechner möglich.

Die Messdaten stehen nicht in einem normierten Dateiformat zur Verfügung, obwohl heute Datenformate zum Austausch von farbmetrischen Daten durch verschiedene Normierungsorganisationen standardisiert sind. Diese Datenformate können nicht direkt durch das Messgerät erzeugt werden. Es ist immer zuerst ein Datentransfer über das herstellerabhängige Datenaustauschprotokoll in einen externen Rechner notwendig, der dann die Daten im entsprechenden Format in einer Datei abspeichert.

Die Einstellung der am Messgerät verfügbaren Parameter über die am Gerät angebrachte Anzeige ist relativ mühsam, da die Anzeige meist nur eine kleine Auflösung hat und normalerweise keine Farben unterstützt.

Die aktuellen Messdaten sind nur von einem Rechner her (dem mit dem Messgerät über die Schnittstelle verbundenen) zugreifbar. Um die Daten auch anderen Rechnern, die z.B. an einem Netzwerk angeschlossen sind, zugänglich zu machen, müssen die entsprechenden Messdaten zuerst vom Rechner, der mit dem Messgerät verbunden ist, über das herstellerabhängige Datenaustauschprotokoll eingelesen und dann in geeigneter Form zu den anderen Rechnern übertragen werden.

Ausgehend von diesem Stand der Technik ist es Aufgabe der vorliegenden Erfindung, eine Messvorrichtung der gattungsgemässen Art dahingehend zu verbessern, dass der Datenaustausch mit einem externen Rechner oder mit einem Netzwerk ohne herstellerspezifisches Datenaustauschprotokoll möglich ist.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: ein Prinzipschema eines ersten Ausführungsbeispiels der erfindungsgemässen Messvorrichtung,
- Fig. 2: ein Schema zur Verdeutlichung der auf dem Rechner der Messvorrichtung laufenden Programme und
- Fig. 3: ein Prinzipschema eines alternativen Ausführungsbeispiels der erfindungsgemässen Messvorrichtung.

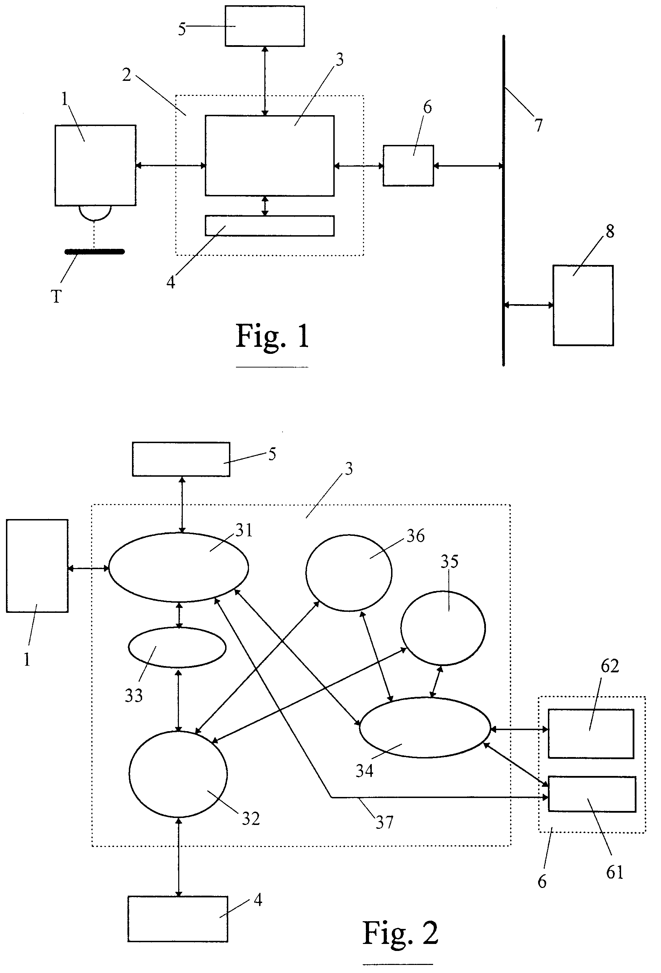

Die in Fig. 1 dargestellte Messvorrichtung umfasst eine Messeinheit 1, eine Steuerungseinrichtung 2, eine Eingabe/Ausgabe-Einheit 5 und Schnittstellenmittel 6. Die Steuerungseinrichtung 2 besteht im wesentlichen aus einem Rechner 3, der mit einem Arbeits- und Programmspeicher 4 zusammenarbeitet. Die Schnittstellenmittel 6 verbinden die Messvorrichtung mit einem Netzwerk 7, an das ein oder mehrere externe Rechner 8 angeschlossen sind.

Die Messeinheit 1 erfasst die gewünschte Messgrösse an einem Messobjekt T und wandelt sie in ein entsprechendes elektrisches Signal um. Typische Messgrössen sind zum Beispiel spektrale Remissions- oder Transmissionswerte des Messobjekts, welche Werte in der Messvorrichtung zur Berechnung abgeleiteter Grössen, typischerweise etwa Farbmesswerte, weiterverarbeitet werden können. Bei entsprechender Ausbildung der Messeinheit 1 können selbstverständlich auch andere Messgrössen erfasst werden.

Die Steuerungseinrichtung 2 steuert die Messeinheit 1 und verarbeitet die von dieser erzeugten elektrischen Signale zu den gewünschten Messdaten bzw. Messergebnissen. Dabei stehen verschiedene Messmodi und Berechnungsfunktionen zur Verfügung, welche durch ein auf dem Rechner 3 der Steuerungseinrichtung 2 laufendes Steuerungsprogramm 31 (Fig. 2) realisiert sind. Die mit dem Rechner 3 zusammenarbeitende Ein/Ausgabe-Einheit 5 umfasst typischerweise eine kleine LCD-Anzeige und einige Tasten oder ähnliche Bedienungsorgane und dient als Benutzerschnittstelle, d.h. zur Anzeige von Messergebnissen und Benutzerführungsinformationen sowie zur manuellen Bedienung der Vorrichtung (Wahl der Messfunktion bzw. des Betriebsmodus, Einstellung von Parametern, Auslösen des Messvorgangs etc.).

Die mit dem Rechner 3 zusammenarbeitenden Schnittstellenmittel 6, beispielsweise eine bi-direktionale serielle Schnittstelle, dienen zum Datenaustausch mit einem externen Rechner 8. Dieser Datenaustausch umfasst sowohl die Übertragung von Messergebnissen (Messdaten) zum externen Rechner als auch die Übertragung von Steuerungsdaten in den Rechner 3 der Messvorrichtung. Die Steuerungsdaten können dabei z.B. die manuellen Eingaben ersetzen und/oder das Steuerungsprogramm 31 selbst verändern (Programm-Erweiterungen, Upgrades etc.)

In dieser Allgemeinheit entspricht die Messvorrichtung mit Ausnahme der Netzanbindung voll und ganz herkömmlichen Messgeräten, wie sie zum Beispiel in den eingangs erwähnten Dokumenten US-A-4 961 646, US-A-5 267 178 und EP-A-0 698 785 detailliert beschrieben sind oder von der Anmelderin unter den Bezeichnungen SPM 100 oder S19 vertrieben werden. Bezüglich des allgemeinen Aufbaus und der allgemeinen Funktionsweise der Messvorrichtung bedarf daher der Fachmann soweit keiner näheren Erläuterung.

Der wesentliche Unterschied der erfindungsgemässen Messvorrichtung gegenüber herkömmlichen Messvorrichtungen dieser Art besteht in einer neuen Art der Anbindung an einen externen Rechner bzw. überhaupt an ein Netzwerk. Diese neue, erfindungsgemässe Art der Anbindung wird im folgenden anhand der Fig. 2 näher erläutert.

Auf dem Rechner 3 der Steuerungseinrichtung 2 der Messvorrichtung läuft, wie schon erwähnt, das Steuerungsprogramm 31, welches mit der Messeinheit 1 und der Eingabe/Ausgabe-Einheit 5 kommuniziert und sämtliche Funktionalitäten der Messvorrichtung zur Verfügung stellt. Gemäss dem grundlegenden Gedanken der Erfindung ist der Rechner 3 mit einem Dateisystem ausgestattet, welches durch ein Dateisystemprogramm 32 in Verbindung mit dem Speicher 4 des Rechners 3 implementiert ist. Geeignete Dateisystemprogramme sind bekannt und in den gängigen Rechner-Betriebssystemen enthalten. Das Dateisystem erlaubt die Ablage von Dateien in einer hierarchischen Verzeichnisstruktur, wie es beispielsweise von PC's bekannt ist.

Ferner ist die Messvorrichtung erfindungsgemäss mit einer Netzwerkschnittstelle ausgestattet. Diese Netzwerkschnittstelle besteht aus einem oder mehreren durch die Schnittstellenmittel 6 gebildeten Netzwerkadaptern (Netzwerk-Hardware) sowie aus mit diesen Netzwerkadaptern zusammenarbeitenden Softwareschnittstellen bzw. Schnittstellenprotokollen, welche auf dem Rechner 3 laufen. Eine typische Implementation besteht dabei aus einer Ethernet Hardware, auf der die Protokolle TCP/IP und FTP bzw. HTTP ablaufen, oder aus einer RS 232 Hardware, auf der PPP, TCP/IP und FTP bzw. HTTP ablaufen, oder einer Kombination der beiden. Beim Ausführungsbeispiel der Fig. 2 sind zwei Netzwerkadapter in Form einer RS-232-Schnittstelle 61 und einer Ethernet- oder einer Tokenring-Karte 62 vorhanden. Die zugehörigen Schnittstellenprotokolle sind z.B. ein TCP/IP-Protokoll 34 und ein FTP-Protokoll 35. Zusätzlich läuft auf dem Rechner 3 noch ein Web-Server-Programm 36, z.B. in Form eines HTTP-Servers. Die Protokolle 34 und 35 können selbstverständlich auch andere einschlägige Protokolle sein.

Das Zusammenspiel bzw. die Funktionsweise der angegebenen Softwareschnittstellen und Protokolle ist in der Literatur beschrieben und nicht Gegenstand der Erfindung. Der Zweck von derartigen Netzwerkschnittstellen ist unter anderem der Aufbau von Verbindungen zum Datenaustausch (von Dateien) zwischen zwei Rechnern, wie dies zum Beispiel bei einem Peer to Peer Netzwerk oder einem Client / Server Netzwerk oder irgend einer anderen Netzwerkverbindung wie einer WWW Verbindung (FTP oder HTTP) benötigt wird.

Das FTP-Protokoll 35 und das Web-Server-Programm 36 kommunizieren mit dem Dateisystemprogramm 32 und stellen das Dateisystem über die Netzwerk-Hardware 61 und/oder 62 dem Netzwerk 7 zur Verfügung. Ein an das Netzwerk angeschlossener externer Rechner 8 (Fig. 1) kann also im Dateisystem abgelegte Dateien aus der Messvorrichtung abrufen oder selbst Dateien im Dateisystem der Messvorrichtung ablegen. Die Ablage der Dateien kann je nach ihrem Inhalt in definierten Verzeichnissen des Dateisystems erfolgen.

Ein weiterer wesentlicher Aspekt der Erfindung besteht nun darin, dass die Kommunikation der Messvorrichtung mit einem externen Rechner nicht über ein herstellerspezifisches Protokoll, sondern über im Dateisystem abgelegte Dateien erfolgt. Auf dem Rechner 3 läuft dazu ein Datentransferprogramm 33, welches mit dem Steuerungsprogramm 31 zusammenarbeitet oder Teil desselben ist. Dieses Datentransferprogramm 33 wandelt einerseits die ermittelten Messdaten in eine Messdatendatei eines definierten Formats um und schreibt diese Messdatendatei in ein Verzeichnis des Dateisystems. Anderseits liest das Datentransferprogramm 33 im Dateisystem abgelegte Steuerungsdatendateien aus und wandelt diese in für das Steuerungsprogramm 31 verständliche Steuerungsdaten um.Voraussetzung dafür ist natürlich, dass die Steuerungsdatendateien in einem definierten, offengelegten Format vorliegen. Auf diese Weise ist der Datenaustausch zwischen der Messvorrichtung und einem Netzwerk bzw. einem an dieses angeschlossenen externen Rechner ohne herstellerspezifisches Datenaustauschprotokoll möglich.

Beim dargestellten Ausführungsbeispiel der erfindungsgemässen Messvorrichtung ist vorgesehen, den Datenaustausch zusätzlich auch noch auf konventionelle Weise, d.h. über das herstellerspezifische Protokoll vornehmen zu können. Dies ist in Fig. 2 durch die direkte Verbindung 37 zwischen dem Steuerungsprogramm 31 und der seriellen Schnittstelle 61 symbolisiert. Die Umschaltung kann automatisch oder durch eine Protokollvorwahl durch den Benutzer an der Messvorrichtung und/oder am externen Rechner erfolgen.

Die in Steuerungsdatendateien enthaltenen Steuerungsdaten können typischerweise Konfigurationsdaten, Kontrolldaten, Sprachmoduldaten, Servicedaten, Log-Daten und Programmerweiterungsdaten sein. Das Datentransferprogramm 33 kann so ausgelegt sein, dass es neue bzw. geänderte Steuerungsdatendateien im Dateisystem automatisch erkennt. Falls eine solche neue bzw. geänderte Datei erkannt wird, wird sie automatisch eingelesen und die ihrem Inhalt entsprechende Aktion ausgelöst, beispielsweise etwa eine Messung ausgeführt, Parameter eingestellt, Programm-Code geladen etc.. Diese Aktionen sind im Prinzip die gleichen wie auch schon bei den herkömmlichen Messvorrichtungen, nur dass eben der Datenaustausch nicht über das herstellerspezifische Protokoll sondern in standardisierter Weise über das Dateisystem erfolgt.

Falls, wie im gezeigten Ausführungsbeispiel, in der Messvorrichtung ein Web-Server integriert ist, kann dieser die Messdaten und die Steuerungsdaten über HTML-Seiten (d.h. über einen geeigneten Internet-Browser) dem Benutzer zugänglich machen. Diese Web-Seiten können Grafiken und zur Web-Programmierung geeignete Elemente, beispielsweise in Java geschriebene Applikationen (Java Applets), ActiveX Controls u.s.w. zur Visualisierung und Datenaufbereitung enthalten.

Die Konfiguration und die Kontrolle der Messvorrichtung (z.B. Messauslösung) kann ebenfalls durch geeignete HTML-Eingabemasken erfolgen. Der Datenrückfluss vom externen Rechner zur Messvorrichtung erfolgt dabei über Dateien, die in speziellen vordefinierten Verzeichnissen auf dem Messvorrichtungsdateisystem abgelegt werden müssen, oder über Kommandos, die über entsprechende serielle Kanäle (z.B. TCP/IP Ports) an die Messvorrichtung übertragen werden.

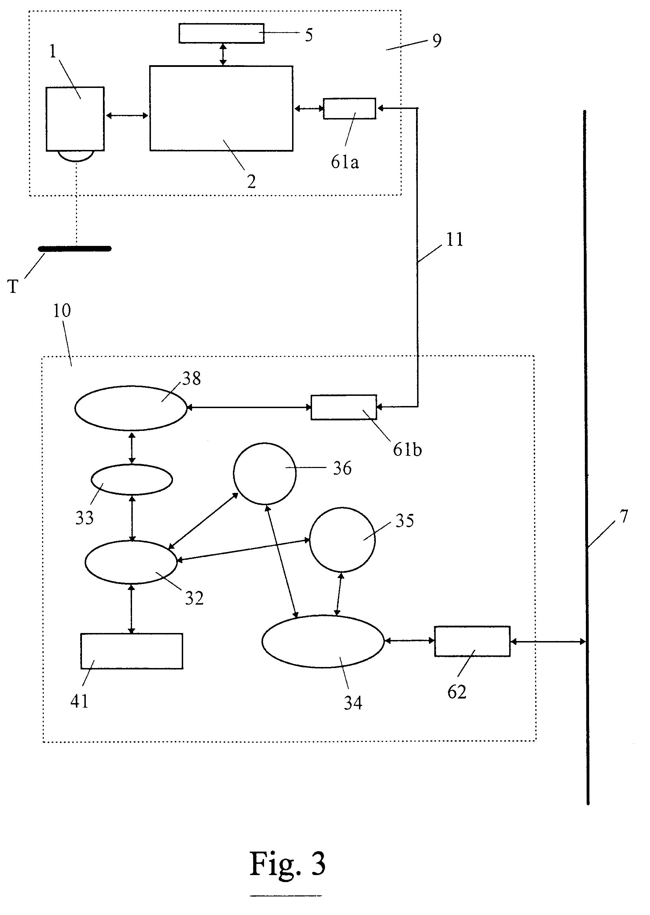

In Fig. 3 ist ein alternatives Ausführungsbeispiel der erfindungsgemässen Messvorrichtung dargestellt.

Die Messvorrichtung besteht hier aus zwei körperlich getrennten Funktionseinheiten, und zwar einem Messgerätteil 9 und einem separaten Rechner 10, welche über serielle Schnittstellen 61a und 61b und eine Leitung 11 miteinander verbunden sind und über das herstellerspezifische Datenaustauschprotokoll miteinander kommunizieren.

Der Messgerätteil 9 umfasst eine Messeinheit 1, eine Steuerungseinrichtung 2, eine Eingabe/Ausgabe-Einrichtung 5 und die schon genannte serielle Schnittstelle 61a. Es ist, mit einer Ausnahme, gleich aufgebaut wie die Messvorrichtung der Fig. 1. Die Ausnahme besteht darin, dass im Messgeräteteil 9 kein Dateisystem und keine Netzwerkschnittstelle vorhanden sind. Das Dateisystem und die Netzwerkschnittstelle sind stattdessen in den separaten Rechner 10 ausgelagert und durch die auf diesem laufenden Programme und Protokolle 32, 33, 34 und 35 implementiert. Der für das Dateisystem erforderliche Speicher ist mit 41 bezeichnet, der die körperliche Verbindung zum Netzwerk 7 herstellende Netzwerkadapter trägt das Bezugszeichen 62. Mit 38 ist das auf dem separaten Rechner laufende herstellerspezifische Datenaustauschprotokoll bezeichnet, welches für die Kommunikation des separaten Rechners 10 mit dem Messgeräteteil 9 über die seriellen Schnittstellen 61a und 61b zuständig ist. In den separaten Rechner 10 ist ferner auch ein Web-Server 36 integriert. Als separater Rechner 10 kann jeder beliebige PC zur Anwendung gelangen.

Die Funktionsweise der Messvorrichtung ist gleich wie beim Ausführungsbeispiel der Figuren 1 und 2, der Unterschied liegt lediglich darin, dass das Dateisystem und die Netzwerkschnittstelle nicht unmittelbar in der Steuerungseinrichtung 2 der Messvorrichtung, sondern im separaten Rechner 10 angeordnet sind. Auf diese Weise kann ein konventionelles Messgerät einfach zu einer erfindungsgemässen Messvorrichtung ausgebaut werden.

Eine weitere, in der Zeichnung nicht dargestellte Ausführungsvariante der erfindungsgemässen Messvorrichtung besteht gewissermassen in einer Kombination der beiden ersten Ausführungsbeispiele. Hierbei ist das Dateisystem wie beim zweiten Ausführungsbeispiel auf einem separaten Rechner (Server) vorhanden, gleichzeitig ist aber der Messgerätteil mit einer Netzwerkschnittstelle und der zugehörigen Software ausgestattet und über ein Netzwerk an den separaten Rechner in Verbindung. Im Messgerätteil werden die erfassten Messdaten in entsprechende Datendateien umgewandelt und über das Netzwerk im Dateisystem des separaten Rechners abgelegt.

Die erfindungsgemässe Messvorrichtung zeichnet sich durch eine Reihe von vorteilhaften und zweckmässigen Merkmalen aus. Es besitzt ein Dateisystem, in dem Messdaten, Konfigurationsdaten, Kontrolldaten, Sprachmodule, Servicedaten, Log-Daten und Firmwareerweiterungen u.s.w. in vorbezeichneten Dateien und Unterverzeichnissen abgelegt sind. Das Dateisystem wird einem Netzwerk mit Hilfe eines geeigneten Netzwerkprotokolls präsentiert. Über das Dateisystem erfolgt die Kommunikation mit der Messvorrichtung (Messdaten, Steuerungsdaten) mit Hilfe von Dateien, welche mit Hilfe von geeigneten Protokollen (z.B. FTP oder HTTP) über das Netzwerk abgefragt werden können. Messdaten und Steuerungsdaten liegen in Form von Dateien mit offengelegten Formaten vor und werden im Dateisystem abgelegt. Messdatendateien können sowohl die Messresultate von Einzelmessungen als auch die Messprotokolle von Mehrfachmessungen und Messwertsammlungen enthalten. In vordefinierten Verzeichnissen des Dateisystems können Firmwareerweiterungen abgelegt werden, welche z.B. in Java programmiert sind und die Funktionalität der Firmware (Steuerungsprogramm) der Messvorrichtung z.B. bezüglich Datenauswertung, Datenkonversion oder Datenvisualisierung erweitern. In vordefinierten Unterverzeichnissen des Dateisystems können HTML-Dateien und zur Web-Programmierung geeignete Elemente (z.B. Java Applets) abgelegt werden, die über den eingebauten Web-Server von den Web-Clients abgefragt werden können. Firmwareupgrades können durch Ablage einer neuen Firmwareversion in ein vordefiniertes Verzeichnis des Dateisystems erfolgen. Desgleichen können Spracherweiterungen (für die Kommunikation mit dem Benutzer) und Sprach-Upgrades durch Hinzufügen / Ersetzen von entsprechenden Textfiles in vordefinierten Verzeichnissen, welche die sprachabhängigen Texte enthalten, durchgeführt werden. Die Messvorrichtung kann als Web-Server auf dem Netz auftreten, wobei z.B. die Präsentation von Messwerten für den Benutzer über HTML Seiten mit integrierten Grafiken und Auswertung bzw. Visualisierung der Messdaten durch eingebettete, zur Web-Programmierung geeignete Komponenten (z.B. Java Applets oder ActiveX Controls) erfolgen kann und wobei die Konfiguration / Kontrolle der Messvorrichtung (z.B. Einstellungen, Messauslösung u.s.w.) über Web-Seiten, die entsprechende Eingabe-/Ausgabefelder aufweisen, durchgeführt werden kann. In diesen Konfigurations- bzw. Kontrollseiten können ebenfalls Java Applets oder ActiveX Controls oder andere zur Web-Programmierung geeignete Komponenten eingebettet sein. In einer alternativen Ausführungsform werden die Messdaten, Konfigurationsdaten und Kontrolldaten via das herstellerabhängige Protokoll vom / zu einem separaten Rechner übertragen und dort entweder in einem Dateisystem dieses Rechners gespeichert und per geeignetem Protokoll (z. Bsp. FTP) an andere Rechner übertragen oder mit Hilfe einer eingebauten Web-Server Funktionalität von / zu Web-Clients übertragen.

Die erfindungsgemässe Messvorrichtung ist nicht auf Spektralfotometer, Farbmessgeräte, Densitometer und ähnliche fotometrische Anwendungen beschränkt, sondern kann selbstverständlich auch für beliebige andere Messanwendungen ausgebildet sein.

## Patentansprüche

1. Rechnergesteuerte Messvorrichtung, insbesondere zur Erfassung von fotometrischen Messwerten, mit einer Messeinheit (1), welche die zu messenden Grössen erfasst und in entsprechende elektrische Signale umwandelt, mit einer mit der Messeinheit zusammenwirkenden Steuereinrichtung (2), welche die Messeinheit steuert und die von der letzteren erzeugten elektrischen Signale aufbereitet, und mit einer mit der Steuereinrichtung zusammenwirkenden Eingabe/Ausgabe-Einheit (5) zur manuellen Bedienung der Messvorrichtung und zur Anzeige von Messergebnissen und Benutzerführungsinformationen, wobei die Steuereinrichtung (2) einen Rechner (3) umfasst, auf dem ein die Funktionalitäten der Messvorrichtung implementierendes Steuerungsprogramm (31) abläuft, und wobei ferner mit dem Rechner (3) zusammenwirkende Schnittstellenmittel (6) vorgesehen sind, über welche der Rechner (3) mit einem externen Rechner (8) kommunizieren kann, wobei aus der Messvorrichtung von dieser erzeugte Messdaten abgerufen und dem Rechner (3) denselben steuernde Steuerungsdaten zugeführt werden können, gekennzeichnet durch ein mit dem Rechner (3) in Verbindung stehendes Dateisystem (32,4; 32,41), in welchem die Mess- und/oder Steuerungsdaten in Form von Dateien definierten Formats abgelegt werden können, und durch Mittel (34,35,36,61,62), um das Dateisystem einem Netzwerk (7) zur Verfügung zu stellen, wobei die Kommunikation zwischen dem Rechner (3) und einem an das Netzwerk (7) angeschlossenen externen Rechner (8) anhand der im Dateisystem (32,4; 32,41) abgelegten Dateien erfolgt.

2. Vorrichtung nach Anspruch 1, dadurch gekennzeichnet, dass als Steuerungsdaten Konfigurationsdaten und/oder Kontrolldaten und/oder Sprachmoduldaten und/oder Servicedaten und/oder Log-Daten und/oder Programmerweiterungsdaten im Dateisystem (32,4; 32,41) in definierten Verzeichnissen in Form von Steuerungsdatendateien definierten Formats ablegbar sind.

3. Vorrichtung nach einem der vorangehenden Ansprüche, dadurch gekennzeichnet, dass das Dateisystem (32,4) durch ein auf dem Rechner (3) der Steuerungseinrichtung (2) laufendes Dateisystemprogramm (32) in Verbindung mit einem vom Rechner (3) angesteuerten Speicher (4) implementiert ist.

4. Vorrichtung nach Anspruch 3, dadurch gekennzeichnet, dass auf dem Rechner (3) der Steuerungseinrichtung (2) ein mit den Schnittstellenmitteln (6) zusammenwirkendes standardisiertes Datenübertragungsprotokoll (34,35) läuft, welches das Dateisystem (32,4) über die Schnittstellenmittel (6) einem Netzwerk (7) zur Verfügung stellt.

5. Vorrichtung nach Anspruch 3 oder 4, dadurch gekennzeichnet, dass auf dem Rechner (3) der Steuerungseinrichtung (2) ein mit den Schnittstellenmitteln (6) zusammenwirkendes Web-Server-Programm (36) läuft, welches über die Schnittstellenmittel (6) den Datenaustausch mit einem Web-Client ermöglicht.

6. Vorrichtung nach Anspruch 1 oder 2, dadurch gekennzeichnet, dass ein separater Rechner (10) vorgesehen ist, der mit dem Rechner (3) der Steuerungseinrichtung (2) über die Schnittstellenmittel (6) verbunden ist und über ein festgelegtes Protokoll (38) kommuniziert, dass das Dateisystem (32,41) durch ein auf dem separaten Rechner (10) laufendes Dateisystemprogramm (32) in Verbindung mit einem von diesem separaten Rechner angesteuerten Speicher (41) implementiert ist, und dass die Zurverfügungstellung des Dateisystems (32,41) an ein Netzwerk (7) durch den separaten Rechner (10) erfolgt.

7. Vorrichtung nach Anspruch 6, dadurch gekennzeichnet, dass der separate Rechner (10) als Web-Server ausgebildet ist.

8. Vorrichtung nach einem der vorangehenden Ansprüche, dadurch gekennzeichnet, dass die Schnittstellenmittel (6) einen Netzwerkadapter in Form einer standardisierten Netzwerkhardware (62) und/oder eine bi-direktionale serielle Schnittstelle (61) umfassen.

9. Vorrichtung nach einem der vorangehenden Ansprüche, dadurch gekennzeichnet, dass sie als Densitometer oder Farbmessgerät oder Spektralfotometer ausgebildet ist.
